# EUROPÄISCHE PATENTSCHRIFT

(11) **EP 1 477 052 B1**
(45) Veröffentlichungstag und Bekanntmachung des Hinweises auf die Patenterteilung: **21.08.2013**
(21) Anmeldenummer: 04102014.0
(22) Anmeldetag: 10.05.2004
(51) Int. Cl.: A01B 63/10

(54) **Vorrichtung und Verfahren zur Ansteuerung eines Dreipunkt-Geräteaufbaus**
Device and method for adjusting a three-point hitch
Dispositif et méthode pour ajuster un accouplage trois points

(30) Priorität: 12.05.2003 WO PCT/EP03/04955; 11.11.2003 DE 10352898
(43) Veröffentlichungstag der Anmeldung: 17.11.2004
(73) Patentinhaber: DEERE & COMPANY, Moline, Illinois 61265-8098 (US)
(72) Erfinder: Nordhoff, Hendrik, 28329, Havixbeck (DE)
(74) Vertreter: Holst, Sönke

(56) Entgegenhaltungen:
- DE-A- 19 611 626
- FR-A- 1 270 600
- US-A- 3 750 757
- US-A1- 2002 195 258
- US-A1- 2004 079 224

## Beschreibung

Die Erfindung betrifft eine Vorrichtung und ein Verfahren zur Ansteuerung eines Dreipunkt-Geräteaufbaus für ein landwirtschaftliches oder industrielles Nutzfahrzeug. Das Nutzfahrzeug ist insbesondere in Form eines Traktors ausgebildet. Der Dreipunkt-Geräteaufbau umfasst einen Oberlenker und zwei Unterlenker. Zur Verstellung der Ausrichtung eines Unterlenkers ist eine zweiseitig wirkende längenverstellbare Hydraulikeinheit vorgesehen. Eine Hydraulikeinheit ist jeweils über mindestens eine Versorgungsleitung mit einer Hydraulikversorgung und/oder mit einem Hydrauliktank verbindbar. Die Versorgungsleitungen sind derart ausgebildet, dass die Hydraulikeinheiten jeweils unabhängig voneinander ansteuerbar sind.

Landwirtschaftliche oder industrielle Nutzfahrzeuge oder Arbeitsmaschinen enthalten häufig Vorrichtungen zur Aufnahme von Arbeitsgeräten. So weist beispielsweise ein konventioneller Ackerschlepper im Heckbereich eine Dreipunktanbauvorrichtung bzw. einen Dreipunkt-Geräteaufbau auf, die bzw. der im Wesentlichen zwei Unterlenker und einen Oberlenker enthält, deren freie Enden mit Fanghaken oder anderen Befestigungsmitteln zur Befestigung von Anbaugeräten ausgestattet sind, siehe z.B. US 2002/0195258. Üblicherweise ist jeder der beiden Unterlenker über sogenannte Hubstreben mit einer gemeinsamen Hubwelle verbunden, welches sich hydraulisch verdrehen lässt. Damit ergibt sich eine starre mechanische Verbindung zwischen den beiden Unterlenkern und ein erzwungener Gleichlauf der Unterlenker.

Aus der DE 199 39 967 C2 ist ein Hubwerk für Unterlenker einer Anbaueinrichtung eines Traktors bekannt. Hierbei sind die Hydraulikeinheiten, welche zur Verstellung der Ausrichtung der Unterlenker vorgesehen sind, getrennt voneinander ansteuerbar. Durch diese Art der Ansteuerung soll eine exakte Verstellung der Unterlenker gewährleistet sein. Ferner soll eine Verstellung der beiden Unterlenker unabhängig voneinander vornehmbar sein, um beispielsweise eine Querneigung zwischen Nutzfahrzeug und Arbeitsgerät auszugleichen.

Insbesondere der Ausgleich einer Querneigung zwischen Nutzfahrzeug und Arbeitsgerät während des laufenden Betriebs erscheint mit der aus der DE 199 39 967 C2 bekannten Anbaueinrichtung problematisch, da hierzu eine aktive Ansteuerung der die Ausrichtung der Unterlenker verstellenden Hydraulikeinheiten erforderlich ist. Dies ist insbesondere in der Ansteuerung aufwendig.

Der vorliegenden Erfindung liegt daher die Aufgabe zugrunde, eine Vorrichtung und ein Verfahren der eingangs genannten Art anzugeben und weiterzubilden, durch welche(s) die vorgenannten Probleme überwunden werden. Insbesondere soll eine Vorrichtung und ein Verfahren zur Ansteuerung eines Dreipunkt-Geräteaufbaus für ein landwirtschaftliches oder industrielles Nutzfahrzeug angegeben und weitergebildet werden, welche(s) eine vereinfachte Ansteuerung ermöglicht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung der eingangs genannten Art dadurch gekennzeichnet, dass die Versorgungsleitungen derart ausgebildet sind, dass die die Unterlenker betreffenden Hydraulikeinheiten auch dann miteinander verbindbar sind, wenn die Hydraulikeinheiten nicht mit der Hydraulikversorgung und/oder mit dem Hydrauliktank verbunden sind.

Erfindungsgemäß ist erkannt worden, dass durch die erfindungsgemäße Ausbildung der Versorgungsleitungen eine inaktive Verstellung der Unterlenker möglich ist, so dass eine aufwändige Steuerung nicht erforderlich ist. Hierdurch kann in besonders vorteilhafter Weise ein Bewegungsfreiheitsgrad um die Nutzfahrzeuglängsachse erzielt werden, wodurch eine verbesserte Bodenanpassung eines an das Nutzfahrzeug angekoppelten Arbeitsgeräts erzielt werden kann und dieser Bewegungsfreiheitsgrad in weiterer vorteilhafter Weise nicht von dem Arbeitsgerät zur Verfügung gestellt werden muss. Zusätzlich können rotatorische Bewegungsfreiheitsgrade für gezogene Arbeitsgeräte genutzt werden. Somit vermag die erfindungsgemäße Vorrichtung zur Ansteuerung eines Dreipunkt-Geräteaufbaus eine Querneigung zwischen Nutzfahrzeug und Arbeitsgerät auszugleichen.

Unter einer Verbindung der die Unterlenker betreffenden Hydraulikeinheiten im Sinn der vorliegenden Erfindung ist insbesondere eine Verbindung zu verstehen, welche mittels mindestens einer Verbindungsleitung für Hydraulikflüssigkeit unmittelbar realisieren kann. Hierbei können Kolbenräume bzw. Kolbenstangenräume der Hydraulikzylinder miteinander verbindbar sein, falls eine Hydraulikeinheit einen zweiseitig wirkenden längenverstellbaren Hydraulikzylinder mit einem Kolbenraum und einem Kolbenstangenraum aufweist.

In einer ganz besonders bevorzugten Ausführungsform weist der Oberlenker eine zweiseitig wirkende längenverstellbare Hydraulikeinheit auf. Im Konkreten könnte der Oberlenker durch einen zweiseitig wirkenden längenverstellbaren Hydraulikzylinder ausgebildet sein. Insoweit ist eine hydraulische Verschaltung der Hydraulikeinheiten für die Unterlenker mit der Hydraulikeinheit des Oberlenkers möglich. Hierbei können grundsätzlich die Hydraulikeinheiten derart verschaltet werden, dass die Druckkraft des Oberlenkers auf die Hubkraft der Unterlenker und somit auf deren Hydraulikeinheiten wirkt. Bei einer Anordnung des Oberlenkers und der Unterlenker gemäß eines klassischen Dreipunkt-Geräteanbaus kann hierdurch eine höhere Gewichtsübertragung vom Arbeitsgerät auf das Nutzfahrzeug und eine bessere Bodenanpassung des Arbeitsgeräts im laufenden Betrieb erreicht werden. In besonders vorteilhafter Weise ist dies durch eine passive Verschiebung des Momentanpols durch die Hydraulikeinheiten möglich, so dass auch hier keine aufwändige Ansteuerung der Hydraulikeinheiten, beispielsweise in Form eines Regelkreises und entsprechend angesteuerten Ventilen, erforderlich ist. Dies gilt insbesondere für Arbeitsgeräte, welche auf einer Walze in der Tiefe geführt werden, beispielsweise einen Grubber.

Eine Hydraulikeinheit weist mindestens einen Hydraulikzylinder auf, welcher einen Kolbenraum und einen Kolbenstangenraum aufweist. Sowohl der Kolbenraum als auch der Kolbenstangenraum könnte jeweils an eine Versorgungsleitung angeschlossen werden. Insoweit ist eine Ausbildung eines erfindungsgemäßen Dreipunkt-Geräteaufbaus mit herkömmlichen Komponenten möglich.

Zu einer voneinander unabhängigen Ansteuerung der Hydraulikeinheiten ist vorgesehen, dass der Teil der Versorgungsleitung zwischen der Hydraulikversorgung oder dem Hydrauliktank und einer Hydraulikeinheit mindestens ein Ventil aufweist. Dieses Ventil könnte beispielsweise in Form eines Mehrwegventils, insbesondere als 4/4-Wegventil, ausgebildet sein. Bevorzugt ist es in Form eines Proportionalventils ausgebildet.

Grundsätzlich könnte ein Mehrwegventil zwischen einer Hydraulikeinheit und der Hydraulikversorgung oder dem Hydrauliktank vorgesehen sein. Alternativ hierzu könnten mehrere einzelne Ventile vorgesehen sein, mit welchen die im Folgenden aufgeführten Schaltzustände ebenfalls eingestellt werden können:
a) Ein Mehrwegventil bzw. Ventil ist derart ausgebildet und ansteuerbar, dass die Verbindung zwischen dem Kolbenraum einer Hydraulikeinheit und der Hydraulikversorgung oder dem Hydrauliktank herstellbar oder unterbrechbar ist.
b) Ein Mehrwegventil bzw. Ventil ist derart ausgebildet und ansteuerbar, dass die Verbindung zwischen dem Kolbenstangenraum einer Hydraulikeinheit und der Hydraulikversorgung oder dem im Hydrauliktank herstellbar oder unterbrechbar ist.

Mit den Schaltzuständen, die mit diesen Ventilen eingestellt werden können, können die einzelnen Hydraulikeinheiten selektiv angesteuert werden, und zwar können die Kolben der Hydraulikzylinder in Abhängigkeit der jeweiligen Ventilstellung ausgefahren, eingefahren oder drucklos geschaltet werden.

Die Versorgungsleitungen, welche zwischen einem Ventil und einer dem Ventil zugeordneten Hydraulikeinheit angeordnet sind, sind mit den Versorgungsleitungen, welche zwischen einem anderen Ventil und einer dem anderen Ventil zugeordneten anderen Hydraulikeinheit angeordnet sind, über Verbindungsleitungen miteinander verbindbar und/oder unterbrechbar. Hierdurch wird eine unmittelbare Verbindung der einzelnen Hydraulikeinheiten auch dann erreicht, wenn die miteinander verbundenen Hydraulikeinheiten nicht mit der Hydraulikversorgung und/oder mit dem Hydrauliktank verbunden sind.

Eine Verbindungsleitung weist ein weiteres Ventil auf, mit welchem die Verbindung unterschiedlicher Hydraulikeinheiten miteinander verbindbar und/oder unterbrechbar ist. Insoweit kann eine Verbindung zweier Hydraulikeinheiten miteinander aktiviert oder deaktiviert werden.

Das weitere Ventil könnte in Form eines 4/2-Wegventils ausgebildet sein. Insbesondere könnte mit dem weiteren Ventil der Kolbenraum und der Kolbenstangenraum unterschiedlicher Hydraulikeinheiten miteinander verbunden und/oder unterbrochen werden.

Besonders bevorzugt ist mindestens eine Verbindungsleitung mit dem Hydrauliktank verbindbar. Eine solche Verbindung könnte beispielsweise mittels eines Absperrventils realisiert werden. Bevorzugt ist ein solches Absperrventil bei allen Verbindungsleitungen vorgesehen, welche jeweils zwei Hydraulikeinheiten miteinander verbinden. Bei die die Unterlenker betreffenden Hydraulikeinheiten in Form von zweiseitig wirkenden Hydraulikzylinder, ist insbesondere vorgesehen, zumindest die Kolbenräume der Hydraulikzylinder über die Verbindungsleitung mit dem Hydrauliktank zu verbinden.

In verfahrensmäßiger Hinsicht wird die eingangs genannte Aufgabe durch die Merkmale des Patentanspruchs 7 gelöst. Demgemäß ist ein Verfahren der eingangs genannten Art dadurch gekennzeichnet, dass die Versorgungsleitungen derart ausgebildet sind, dass zumindest in einem Betriebsmodus die die Unterlenker betreffende Hydraulikeinheiten auch dann miteinander verbunden werden, wenn die Hydraulikeinheiten nicht mit der Hydraulikversorgung und/oder mit dem Hydrauliktank verbunden sind.

Das erfindungsgemäße Verfahren dient insbesondere zur Ansteuerung einer Vorrichtung nach einem der Patentansprüche 1 bis 6, so dass zur Vermeidung von Wiederholungen auf den vorangegangenen Teil der Beschreibung verwiesen wird.

Im Folgenden werden bevorzugte Schaltzustände bzw. Verschaltungen für die Hydraulikeinheiten beschrieben, welche für sich gesehen und/oder in Kombination miteinander jeweils eine mögliche bzw. konkrete Ausgestaltung des erfindungsgemäßen Verfahrens aufzeigen.

So könnte der Kolbenraum und/oder der Kolbenstangenraum sämtlicher Hydraulikeinheiten von der Hydraulikversorgung und von dem Hydrauliktank getrennt werden.

Weiterhin könnte der Kolbenraum und/oder der Kolbenstangenraum mindestens zweier Hydraulikeinheiten voneinander getrennt werden.

Der Kolbenraum und/oder der Kolbenstangenraum mindestens zweier Hydraulikeinheiten könnten miteinander verbunden werden.

Der Kolbenraum und/oder der Kolbenstangenraum mindestens einer Hydraulikeinheit könnte mit dem Hydrauliktank verbunden werden.

Die Kolbenräume beider zur Verstellung der Ausrichtung der Unterlenker vorgesehenen Hydraulikeinheiten könnten mit dem Hydrauliktank verbunden werden.

Schließlich könnten die Kolbenräume sämtlicher Hydraulikeinheiten mit dem Hydrauliktank verbunden werden.

Im Rahmen der Figurenbeschreibung sind konkrete Schaltzustände für die Hydraulikeinheiten ausgeführt, welche sich aus einem der soeben angeführten Schaltzustände bzw. aus einer Kombination der soeben ausgeführten Schaltzustände ergeben kann bzw. können. Insoweit wird zur weiteren Erläuterung auf die Figurenbeschreibung verwiesen.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 7 nachgeordneten Patentansprüchen und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: einen Schaltplan für einen konventionellen Dreipunkt-Geräteaufbau, wie er aus dem Stand der Technik bekannt ist,
- Fig. 2: ein Ausführungsbeispiel eines Schaltplans einer erfindungsgemäßen Vorrichtung zur Ansteuerung eines Dreipunkt-Geräteaufbaus für ein landwirtschaftliches oder industrielles Nutzfahrzeug,
- Fig. 3 bis 7: jeweils den Schaltplan aus Fig. 2, bei welchem jeweils eine andere Ventilstellung vorliegt.

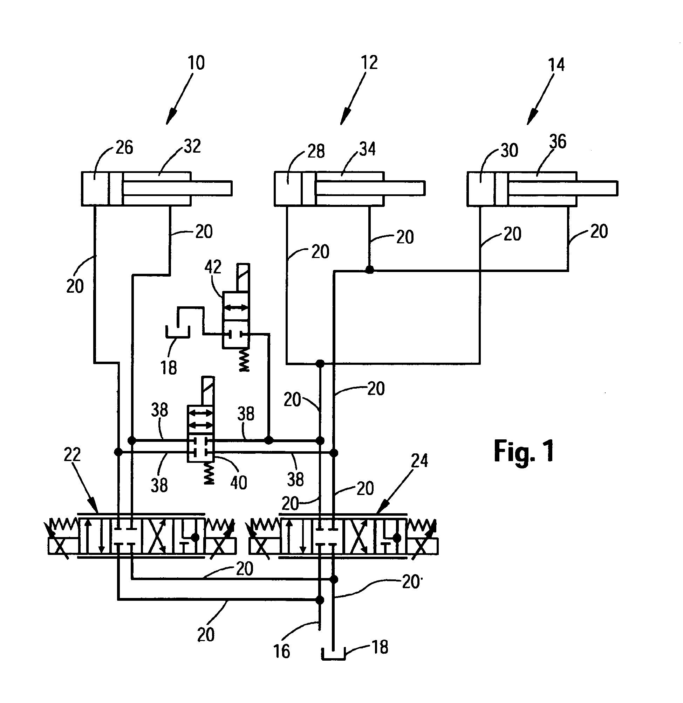

Fig. 1 zeigt in einer schematischen Darstellung einen Hydraulikschaltplan, wie er für einen aus dem Stand der Technik bekannten Dreipunkt-Geräteaufbau denkbar ist. Hierbei umfasst der in den Fig. 1 bis 7 lediglich schematisch angedeutete Oberlenker eine zweiseitig wirkende längenverstellbare Hydraulikeinheit 10, welche im Konkreten jeweils in Form eines zweiseitig wirkenden Hydraulikzylinders ausgeführt ist. Die in den Fig. 1 bis 7 nicht gezeigten Unterlenker werden jeweils mit den Hydraulikeinheiten 12 und 14 angehoben bzw. abgesenkt, mit anderen Worten also mit den Hydraulikeinheiten 12 und 14 in ihrer Ausrichtung verändert. Auch die zwei Hydraulikeinheiten 12, 14 sind in Form von zweiseitig wirkenden längenverstellbaren Hydraulikzylindern ausgebildet. Gleiche oder ähnliche Bauteile bzw. Baugruppen sind in den Fig. mit jeweils denselben Bezugszeichen gekennzeichnet.

Sämtliche der in Fig. 1 gezeigten Hydraulikeinheiten 10, 12, 14 können über dort vorgesehene Versorgungsleitungen 20 mit einer Hydraulikversorgung 16 und einem Hydrauliktank 18 verbunden werden, vorausgesetzt die beiden Ventile 22, 24 befinden sich in einer entsprechenden Ventilstellung. Bei den Versorgungsleitungen 20 handelt es sich im Konkreten um Hydraulikleitungen zur Beförderung bzw. zur Aufnahme von Hydraulikflüssigkeit. Bei den Ventilen 22, 24 handelt es sich im Konkreten um Proportionalventile. In der in Fig. 1 gezeigten momentan aktiven Ventilstellung der Ventile 22, 24 sind die Hydraulikeinheiten 10, 12 und 14 jeweils von der Hydraulikversorgung 16 und dem Hydrauliktank 18 getrennt.

Die zweiseitig wirkenden Hydraulikzylinder der Hydraulikeinheiten 10, 12, 14 umfassen jeweils einen Kolbenraum 26, 28, 30 sowie einen Kolbenstangenraum 32, 34, 36.

Es sind Verbindungsleitungen 38 vorgesehen, mit welchen die Verbindungsleitungen 20, welche von dem Ventil 22 zu der Hydraulikeinheit 10 verlaufen, mit den Verbindungsleitungen 20 verbindbar sind, welche zwischen dem Ventil 24 und den Hydraulikeinheiten 12, 14 verlaufen. Die Verbindungsleitungen 38 weisen ein weiteres Ventil 40 auf, mit welchem die Verbindungsleitungen 38 unterbrechbar sind. Über das Absperrventil 42 sind die Kolbenräume 28, 30 der Hydraulikeinheiten 12, 14 mit dem Hydrauliktank 18 verbindbar.

Falls das in Form eines 4/4-Mehrwegventils ausgeführte Ventil 22 mit seiner linken Ventilstellung in der aktiven Position ist, wird der Kolben der Hydraulikeinheit 10 beziehungsweise der Oberlenker des Dreipunkt-Geräteaufbaus ausgefahren. In der in Fig. 1 gezeigten Stellung des Ventils 22, in der zweiten Ventilstellung von links, verbleibt die Hydraulikeinheit 10 in ihrer Stellung, vorausgesetzt, dass das weitere Ventil 40 sich in der in der Fig. 1 gezeigten Stellung befindet. Falls das Ventil 22 sich mit der dritten Ventilstellung von links in der aktiven Position befindet, wird die dem Oberlenker zugeordnete Hydraulikeinheit 10 eingefahren. Falls das Ventil 22 mit der rechten Ventilstellung sich in der aktiven Position befindet, ist sowohl der Kolbenraum 26 als auch der Kolbenstangenraum 32 der Hydraulikeinheit 10 mit dem Hydrauliktank 18 verbunden, mit anderen Worten also drucklos geschaltet. Entsprechendes gilt für die Ventilstellungen des Ventils 24, mit welchem die Hydraulikeinheiten 12, 14 entsprechend ansteuerbar sind, da die Versorgungsleitungen 20 zwischen dem Ventil 24 und den Hydraulikeinheiten 12, 14 miteinander verbunden sind.

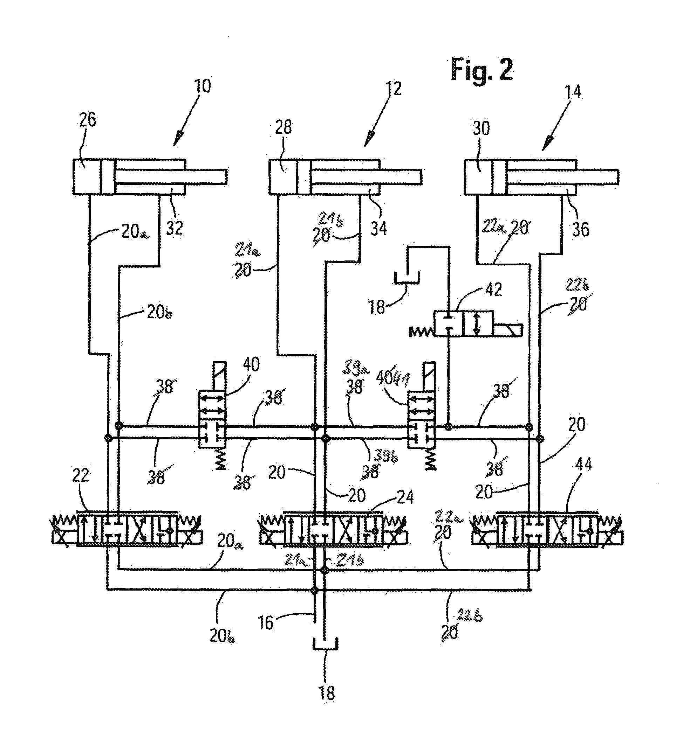

Die Fig. 2 bis 7 zeigen ein Ausführungsbeispiel eines erfindungsgemäßen Hydraulikschaltplans, mit welchem die Hydraulikeinheiten 10, 12 und 14 angesteuert werden können. Zur Ansteuerung der Hydraulikeinheit 10 ist das Ventil 22, zur Ansteuerung der Hydraulikeinheit 12 ist das Ventil 24 und zur Ansteuerung der Hydraulikeinheit 14 ist das Ventil 44 vorgesehen. Demgemäß kann also die Hydraulikeinheit 12 unabhängig von der Hydraulikeinheit 14 über die beiden Ventile 24, 44 angesteuert werden. Hierbei können mit Hilfe der Verbindungsleitungen 38 die entsprechenden Versorgungsleitungen 20 der Hydraulikeinheiten 12, 14 verbunden werden, welche zwischen dem Ventil 24 und der Hydraulikeinheit 12 bzw. zwischen dem Ventil 44 und der Hydraulikeinheit 14 verlaufen. In der in Fig. 2 gezeigten Ventilstellung der Ventile 22, 24, 44, 40 sind sämtliche Hydraulikeinheiten 10, 12, 14 in einer starren Stellung, so dass ein Arbeitsgerät, welches an ein Arbeitsfahrzeug angekoppelt ist, keine Relativbewegungen zum Arbeitsfahrzeug ausführen kann.

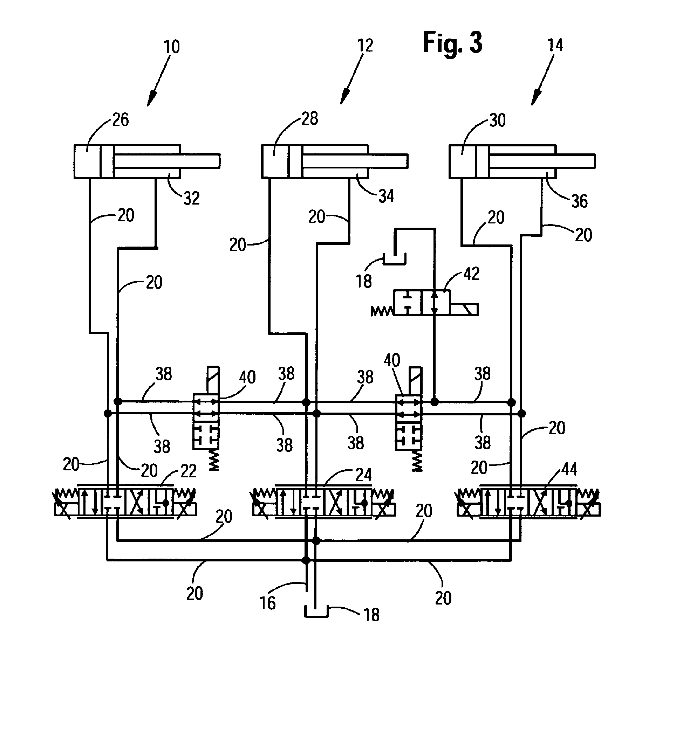

Gemäß der Ventilstellung aus Fig. 3 sind beide Ventile 40 auf Durchgang geschaltet, so dass der Kolbenraum 26 der Hydraulikeinheit 10 mit den Kolbenstangenräumen 34, 36 der Hydraulikeinheiten 12, 14 verbunden sind. Hierdurch kann eine auf den Oberlenker und somit auf die Hydraulikeinheit 10 wirkende Druckkraft in eine Hubkraftkomponente auf die Hydraulikeinheiten 12, 14 übertragen werden. Die auf die Hydraulikeinheit 10 wirkende Kraft setzt sich im Wesentlichen aus dem Arbeitsgerätegewicht und der Zugkraft des Arbeitsgeräts zusammen. Mit einer solchen Verschaltung ist es möglich, einen Gewichtstransfer eines Arbeitsgeräts auf das Arbeitsfahrzeug zu realisieren, welcher abhängig von dem Arbeitsgerätegewicht und der benötigten Zugkraft ist. Der Gewichtstransfer bezieht sich auf die Belastung der Vorderachse des Arbeitsfahrzeugs abhängig von der auf das Arbeitsfahrzeug wirkenden Stützlast des Arbeitsgeräts.

Bei aus dem Stand der Technik bekannten Dreipunkt-Geräteaufbauten hat eine positive Stützlast eines Arbeitsgeräts immer eine Entlastung der Vorderachse des Arbeitsfahrzeugs zur Folge. Die Arbeitstiefe des Arbeitsgeräts wird über das Gesamtvolumen der unter Druck stehenden Zylinderkammern eingestellt. Der Kolbenstangenraum 32, der Kolbenraum 28 und der Kolbenraum 30 sind hierbei über das freigeschaltete Ventil 42 drucklos mit dem Hydrauliktank 18 verbunden.

Ganz besonders vorteilhaft bei der Ventilstellung aus Fig. 3 ist, dass die Hydraulikeinheiten 10, 12, 14 ein "Abknicken" des Arbeitsgeräts relativ zum Arbeitsfahrzeug um die Arbeitsfahrzeugquerachse unterstützen. Dadurch kann das Arbeitsgerät besser von den Bewegungen des Arbeitsfahrzeugs entkoppelt werden. Diese Schaltung ist insbesondere für Arbeitsgeräte geeignet, welche auf einer Walze geführt sind. Bei der in Fig. 3 gezeigten Schaltung wird in Abhängigkeit von der Stützlast des Arbeitsgeräts, was einem entsprechenden hydraulischen Druck in den Kolbenstangenräumen 34, 36 der Hydraulikeinheiten 12, 14 entspricht, die Hydraulikeinheit 10 belastet, wodurch der Gewichtstransfer der diesbezüglichen Stützlast auf die Vorderachse des Arbeitsfahrzeugs erzielt wird. Hierdurch ist eine arbeitsfahrzeugseitig vergrößerte Aufnahme der Stützlast sowie eine verbesserte Fahreigenschaft des Gespanns bestehend aus Arbeitsfahrzeug und Arbeitsgerät möglich, da die Freiheitsgrade - insbesondere der Hydraulikeinheiten 10, 12, 14 - gedämpft werden und das Arbeitsfahrzeug bei Schwingungsanregungen gleichmäßiger belastet wird. Hierdurch entsteht kein Hebelarm zur Aufstandfläche der Hinterräder des Arbeitsfahrzeugs, wie er beispielsweise bei einer Zugmaul-Ankopplung vorliegt. Die Höhe des Arbeitsgeräts wird über das Kolbenstangenraumvolumen der Hydraulikeinheiten 10, 12, 14 eingestellt.

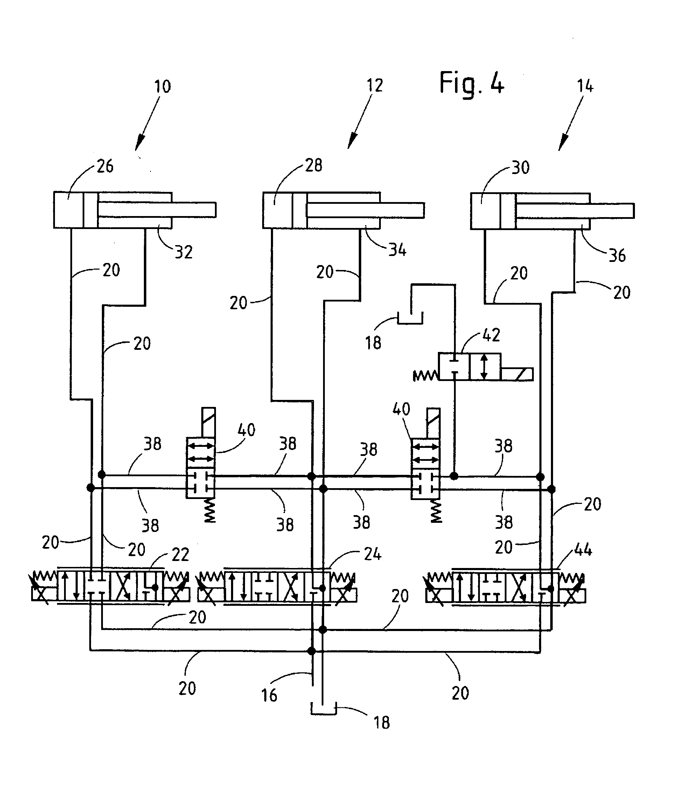

Gemäß der Ventilstellung aus Fig. 4 ist die Hydraulikeinheit 10 gesperrt und die Hydraulikeinheiten 12, 14 befinden sich in Schwimmstellung. Dies führt bei einem horizontalen oder einem parallel zu den Unterlenkern angeordneten Oberlenker bzw. einer horizontalen oder einer parallel zu den Unterlenkern angeordneten Hydraulikeinheit 10 zu einem besseren Einzugsverhalten der Arbeitsgeräte, da im Gegensatz zu den aus dem Stand der Technik bekannten Dreipunkt-Geräteaufbauten kein Gewichtstransfer von dem Arbeitsgerät auf das Arbeitsfahrzeug durch die Zugkraft stattfindet.

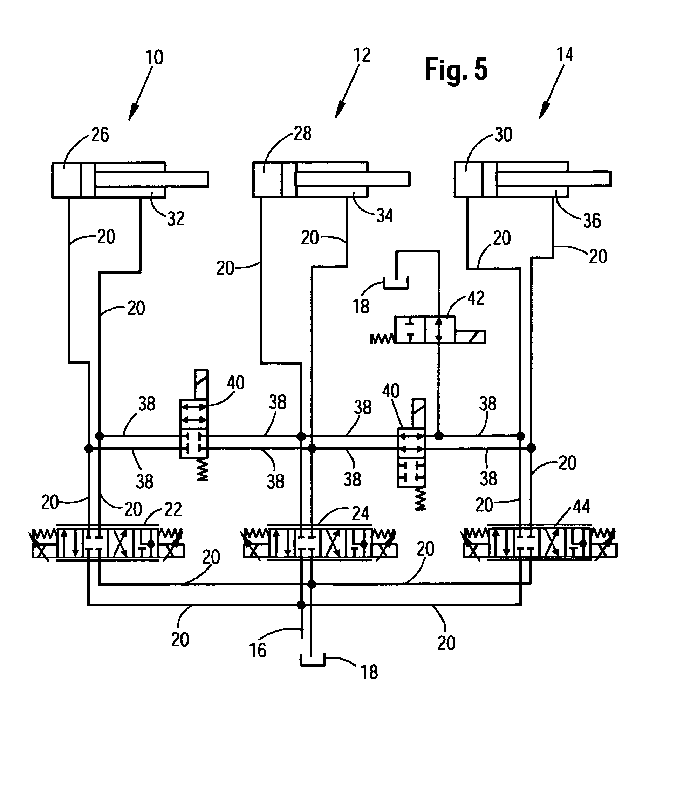

Falls an ein Arbeitsfahrzeug ein Arbeitsgerät mit hohem Zugkraftbedarf bei geringem Eigengewicht und geringer Einzugskraft abzukoppeln ist, ist bevorzugt vorgesehen, die Ventile 22, 24, 44, 40 und 42 derart einzustellen, wie es in Fig. 5 gezeigt ist. Auch hierbei ist der Oberlenker bzw. die Hydraulikeinheit 10 gesperrt, so dass ein Kraftschluss zwischen Arbeitsgerät und Nutzfahrzeug nur über ein Parallelogramm realisiert wird, welches von dem Oberlenker und den Unterlenkern aufgespannt wird. Das Arbeitsgerät kann sich selbst über eine Walze in die Tiefe führen oder sich durch die Unterlenker des Arbeitsfahrzeugs in der Höhe führen lassen. Die Hydraulikeinheiten 12, 14 sind miteinander verbunden, um eine bessere Bodenanpassung des Arbeitsgeräts um die Fahrzeuglängsachse zu gewährleisten. Die Schaltung aus Fig. 5 hat den Vorteil, dass Arbeitsgeräte, die aufgrund ihrer Vertikalkomponente der Zugkraft ihre Arbeitstiefe nicht halten können, ihre Arbeitstiefe mit der erfindungsgemäßen Vorrichtung ohne zusätzliches Gerätegewicht halten können, wie das beispielsweise bei Untergrundhacken der Fall sein könnte.

Grundsätzlich kann der erfindungsgemäße Dreipunkt-Geräteaufbau auch dazu verwendet werden, gezogene Arbeitsgeräte an das Nutzfahrzeug zu koppeln. Hierbei können zusätzliche Freiheitsgrade um die Fahrzeugquerachse - und bei einer Bauweise des Dreipunkt-Geräteaufbaus ohne Hubwelle - auch um die Fahrzeuglängsachse genutzt werden. Hierbei können drei Schaltungen unterschieden werden, nämlich a) eine Ansteuerung ohne Gewichtstransfer zwischen Arbeitsfahrzeug und Arbeitsgerät, b) eine Ansteuerung mit Gewichtstransfer auf die Vorderachse des Arbeitsfahrzeugs und c) eine Ansteuerung mit negativer Stützlast. Eine Ansteuerung zu b) ist beispielsweise Fig. 3 entnehmbar.

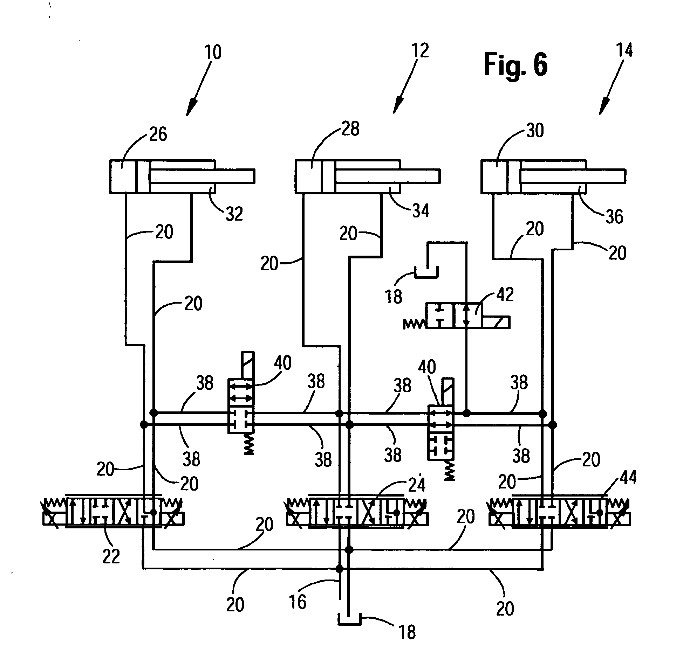

Eine Ansteuerung zu a) ist Fig. 6 entnehmbar. Dort befindet sich die Hydraulikeinheit 10 in einer Schwimmstellung und die Kolbenstangenräume 34, 36 der Hydraulikeinheiten 12, 14 sind miteinander verbunden. Die Kolbenräume 28, 30 sind über das Ventil 42 mit dem Hydrauliktank 18 verbunden. Hierdurch nehmen die Hydraulikeinheiten 12, 14 die Stützlast des Arbeitsgeräts auf und können gleichzeitig Bewegungen mit einem Freiheitsgrad um die Fahrzeuglängsachse realisieren. Der Freiheitsgrad der Bewegungen zwischen Arbeitsfahrzeug und Arbeitsgerät um die Fahrzeugquerachse wird durch die Hydraulikeinheit 10 realisiert, welche sich in Schwimmstellung befindet. Hierdurch ist eine Schwingungstilgung für gezogene Geräte möglich.

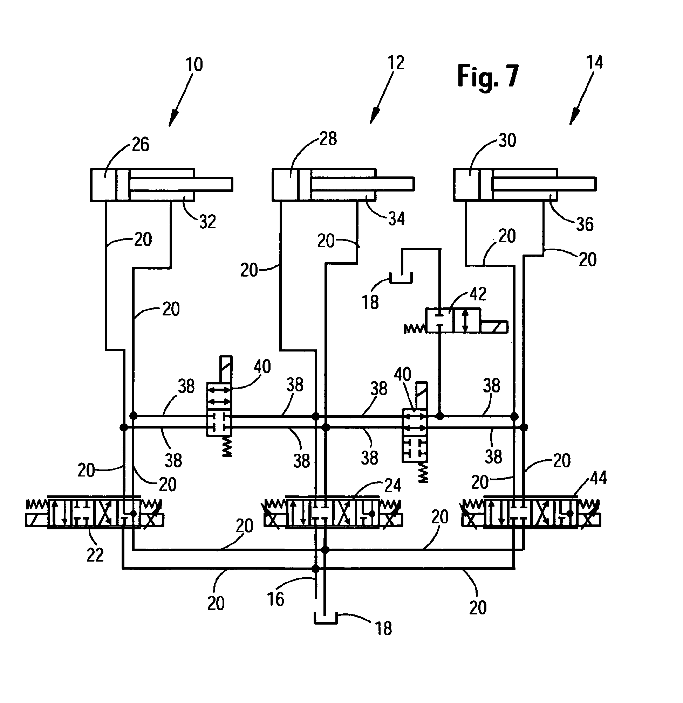

Eine Ansteuerung zu c) ist Fig. 7 entnehmbar, welche für Arbeitsgeräte mit negativer Stützlast geeignet ist. Negative Stützlasten können insbesondere bei leeren oder ungleich beladenen Arbeitsgeräten entstehen. Die Hydraulikeinheit 10 befindet sich auch hier in Schwimmstellung und nimmt keine Kräfte auf. Die miteinander verbundenen Hydraulikeinheiten 12, 14 nehmen die Stützlast des Arbeitsgeräts auf, wobei der Druck jetzt in den Kolbenräumen 28, 30 der Hydraulikeinheiten 12, 14 herrscht. Die miteinander verbundenen Kolbenstangenräume 34, 36 der Hydraulikeinheiten 12, 14 nehmen keine Kräfte auf und sind daher drucklos. Auch bei dieser Ansteuerung der Hydraulikeinheiten 10, 12, 14 sind Freiheitsgrade und die Fahrzeugquerachse und die Fahrzeuglängsachse möglich.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zur Ansteuerung eines Dreipunkt-Geräteaufbaus für ein landwirtschaftliches oder industrielles Nutzfahrzeug, insbesondere für einen Traktor, wobei der Dreipunkt-Geräteaufbau einen Oberlenker und zwei Unterlenker umfasst, wobei zur Verstellung der Ausrichtung der Unterlenker jeweils eine zweiseitig wirkende längenverstellbare Hydraulikeinheit (12, 14) vorgesehen ist,
wobei die Hydraulikeinheiten (12, 14) jeweils einen Hydraulikzylinder aufweisen, welcher einen Kolbenraum (28, 30) und einen Kolbenstangenraum (34, 36) aufweist, wobei der Kolbenraum (28, 30) an erste und der Kolbenstangenraum (34, 36) an zweite Versorgungsleitungen (21a, 21b, 22a, 22b) anschließbar ist,
wobei die Hydraulikeinheiten (12, 14) jeweils über die ersten und zweiten Versorgungsleitungen (21a, 21b, 22a, 22b) mit einer Hydraulikversorgung (16) und/oder mit einem Hydrauliktank (18) verbindbar sind, und
wobei die Versorgungsleitungen (21a, 21b) zwischen der Hydraulikversorgung (16) oder dem Hydrauliktank (18) und der ersten Hydraulikeinheit (12) ein erstes Ventil (24) aufweisen, zur unabhängigen Ansteuerung der ersten Hydraulikeinheit (12),
**dadurch gekennzeichnet,**
**dass** die Versorgungsleitungen (22a, 22b) zwischen der Hydraulikversorgung (16) oder dem Hydrauliktank (18) und der zweiten Hydraulikeinheit (14) ein zweites Ventil (44) aufweisen, zur unabhängigen Ansteuerung der zweiten Hydraulikeinheit (14) und
wobei ein drittes Ventil (41) in Verbindungsleitungen (39a, 39b), über die die ersten Versorgungsleitungen (21a, 22a) miteinander und die zweiten Versorgungsleitungen (216, 22b) miteinander verbindbar und unterbrechbar sind, vorgesehen ist, mit welchem jeweils die Kolbenräume (28, 30) und jeweils die Kolbenstangenräume (34, 36) der Hydraulikeinheiten (12, 14) miteinander verbindbar oder unterbrechbar sind.

2. Vorrichtung nach Anspruch 1, **dadurch gekennzeichnet, dass** der Oberlenker eine zweiseitig wirkende längenverstellbare Hydraulikeinheit (10) aufweist.

3. Vorrichtung nach Anspruch 1 oder 2, **dadurch gekennzeichnet, dass** ein Ventil (22, 24, 44) derart ausgebildet und ansteuerbar ist, dass die Verbindung zwischen dem Kolbenraum (26, 28, 30) einer Hydraulikeinheit (10, 12, 14) und der Hydraulikversorgung (16) oder dem Hydrauliktank (18) herstellbar oder unterbrechbar ist.

4. Vorrichtung nach einem der Ansprüche 1 bis 3, **dadurch gekennzeichnet, dass** ein Ventil (22, 24, 44) derart ausgebildet und ansteuerbar ist, dass die Verbindung zwischen dem Kolbenstangenraum (32, 34, 36) einer Hydraulikeinheit (10, 12, 14) und der Hydraulikversorgung (16) oder dem Hydrauliktank (8) herstellbar oder unterbrechbar ist.

5. Vorrichtung nach einem der Ansprüche 1 bis 4, **dadurch gekennzeichnet, dass** das dritte Ventil (41) in Form eines 4/2-Wegventils ausgebildet ist, mit welchem vorzugsweise der Kolbenraum (28, 30) und der Kolbenstangenraum (34, 36) unterschiedlicher Hydraulikeinheiten (12, 14) miteinander verbindbar und/oder unterbrechbar sind.

6. Vorrichtung nach einem der Ansprüche 1 bis 5, **dadurch gekennzeichnet, dass** mindestens eine Verbindungsleitung (39a, 39b) - vorzugsweise mittels eines Absperrventils (42) - mit dem Hydrauliktank (18) verbindbar ist.

7. Verfahren zur Ansteuerung eines Dreipunkt-Geräteaufbaus für ein landwirtschaftliches oder industrielles Nutzfahrzeug, insbesondere für einen Traktor, wobei der Dreipunkt-Geräteaufbau einen Oberlenker und zwei Unterlenker umfasst, wobei die Ausrichtung der Unterlenker mit jeweils einer zweiseitig wirkenden längenverstellbaren Hydraulikeinheit (12, 14) erfolgt,
wobei die Hydraulikeinheiten (12, 14) jeweils einen Hydraulikzylinder aufweisen, welcher einen Kolbenraum (28, 30) und einen Kolbenstangenraum (34, 36) aufweist, wobei der Kolbenraum (28, 30) an erste und der Kolbenstangenraum (34, 36) an zweite Versorgungsleitungen (21a, 21b, 22a, 22b) angeschlossen werden kann
wobei die Hydraulikeinheiten (12, 14) jeweils über die ersten und zweiten Versorgungsleitungen (21a, 21b, 22a, 22b) mit einer Hydraulikversorgung (16) und/oder mit einem Hydrauliktank (18) verbunden werden können und
wobei die Versorgungsleitungen (21a, 21b) zwischen der Hydraulikversorgung (16) oder dem Hydrauliktank (18) und der ersten Hydraulikeinheit (12) ein erstes Ventil (24) aufweisen, über das zumindest in einem Betriebsmodus die erste Hydraulikeinheit (12) unabhängig angesteuert wird,
**dadurch gekennzeichnet,**
**dass** die Versorgungsleitungen (22a, 22b) zwischen der Hydraulikversorgung (16) oder dem Hydrauliktank (18) und der zweiten Hydraulikeinheit (14) ein zweites Ventil (44) aufweisen, über das zumindest in einem Betriebsmodus die zweite Hydraulikeinheit (14) unabhängig angesteuert wird und
wobei ein drittes Ventil (41) in Verbindungsleitungen (39a, 39b), über die die ersten Versorgungsleitungen (21a, 22a) miteinanden und die zweiten Versorgungsleitungen (216, 22b) miteinander verbunden und unterbrochen werden können, vorgesehen ist, mit welchem jeweils die Kolbenräume (28, 30) und jeweils die Kolbenstangenräume (34, 36) der Hydraulikeinheiten (12, 14) zumindest in einem Betriebsmodus miteinander verbunden oder unterbrochen werden.

8. Verfahren nach Anspruch 7, **dadurch gekennzeichnet, dass** der Oberlenker eine zweiseitig wirkende längenverstellbare Hydraulikeinheit (10) aufweist.

9. Verfahren nach Anspruch 7 oder 8, **dadurch gekennzeichnet, dass** der Kolbenraum (26, 28, 30) und/oder der Kolbenstangenraum (32, 34, 36) sämtlicher Hydraulikeinheiten (10, 12, 14) von der Hydraulikversorgung (16) und von dem Hydrauliktank (18) getrennt werden.

10. Verfahren nach einem der Ansprüche 7 bis 9, **dadurch gekennzeichnet, dass** der Kolbenraum (28, 30) und/oder der Kolbenstangenraum (34, 36) mindestens zweier Hydraulikeinheiten (12, 14) voneinander getrennt werden.

11. Verfahren nach einem der Ansprüche 7 bis 10, **dadurch gekennzeichnet, dass** der Kolbenraum (26, 28, 30) und/oder der Kolbenstangenraum (32, 34, 36) mindestens zweier Hydraulikeinheiten (10, 12, 14) miteinander verbunden werden.

12. Verfahren nach einem der Ansprüche 7 bis 11, **dadurch gekennzeichnet, dass** der Kolbenraum (26, 28, 30) und/oder der Kolbenstangenraum (32, 34, 36) mindestens einer Hydraulikeinheit (10, 12, 14) mit dem Hydrauliktank (16) verbunden wird.

13. Verfahren nach einem der Ansprüche 7 bis 12, **dadurch gekennzeichnet, dass** die Kolbenräume (28, 30) beider zur Verstellung der Ausrichtung der Unterlenker vorgesehenen Hydraulikeinheiten (12, 14) mit dem Hydrauliktank (18) verbunden werden.

14. Verfahren nach einem der Ansprüche 7 bis 13, **dadurch gekennzeichnet, dass** die Kolbenräume (26, 28, 30) sämtlicher Hydraulikeinheiten (10, 12, 14) mit dem Hydrauliktank (18) verbunden werden.

## Claims

1. Device for activating a three-point hitch for an agricultural or industrial utility vehicle, in particular for a tractor, wherein the three-point hitch comprises an upper member and two lower members, wherein, in order to adjust the orientation of the lower members, a double-action, length-adjustable hydraulic unit (12, 14) is provided for each thereof, wherein the hydraulic units (12, 14) each have a hydraulic cylinder, which has a piston chamber (28, 30) and a piston rod chamber (34, 36), wherein the piston chamber (28, 30) is joinable to first supply lines (21 a, 21 b, 22a, 22b) and the piston rod chamber (34, 36) is joinable to second supply lines (21 a, 21 b, 22a, 22b), wherein the hydraulic units (12, 14) are each connectable via the first and second supply lines (21 a, 21 b, 22a, 22b) to a hydraulic supply (16) and/or to a hydraulic tank (18), and wherein the supply lines (21 a, 21 b) between the hydraulic supply (16) or the hydraulic tank (18) and the first hydraulic unit (12) have a first valve (24), for the independent activation of the first hydraulic unit (12), **characterized in that** the supply lines (22a, 22b) between the hydraulic supply (16) or the hydraulic tank (18) and the second hydraulic unit (14) have a second valve (44), for the independent activation of the second hydraulic unit (14), and wherein a third valve (41) is provided in connecting lines (39a, 39b), via which the first supply lines (21 a, 22a) are connectable to and are interruptible from each other and the second supply lines (21 b, 22b) are connectable to and are interruptible from each other, by means of which third valve the piston chambers (28, 30) and the piston rod chambers (34, 36) of the hydraulic units (12, 14) are in each case connectable to or are interruptible from each other.

2. Device according to Claim 1, **characterized in that** the upper member has a double-action, length-adjustable hydraulic unit (10).

3. Device according to Claim 1 or 2, **characterized in that** a valve (22, 24, 44) is designed and is activatable in such a manner that the connection between the piston space (26, 28, 30) of a hydraulic unit (10, 12, 14) and the hydraulic supply (16) or the hydraulic tank (18) is producible or is interruptible.

4. Device according to one of Claims 1 to 3, **characterized in that** a valve (22, 24, 44) is designed and is activatable in such a manner that the connection between the piston rod chamber (32, 34, 36) of a hydraulic unit (10, 12, 14) and the hydraulic supply (16) or the hydraulic tank (8) is producible or interruptible.

5. Device according to one of Claims 1 to 4, **characterized in that** the third valve (41) is designed in the form of a 4/2-port directional control valve, with which, preferably, the piston chamber (28, 30) and the piston rod chamber (34, 36) of different hydraulic units (12, 14) are connectable to and/or are interruptible from each other.

6. Device according to one of Claims 1 to 5, **characterized in that** at least one connecting line (39a, 39b) is connectable to the hydraulic tank (18) - preferably by means of a shut-off valve (42).

7. Method for activating a three-point hitch for an agricultural or industrial utility vehicle, in particular for a tractor, wherein the three-point hitch comprises an upper member and two lower members, wherein the lower members are oriented by a double-action, length-adjustable hydraulic unit (12, 14) for each thereof, wherein the hydraulic units (12, 14) each have a hydraulic cylinder, which has a piston chamber (28, 30) and a piston rod chamber (34, 36), wherein the piston chamber (28, 30) can be joined to first supply lines (21 a, 21 b, 22a, 22b) and the piston rod chamber (34, 36) can be joined to second supply lines (21 a, 21 b, 22a, 22b), wherein the hydraulic units (12, 14) can each be connected via the first and second supply lines (21 a, 21 b, 22a, 22b) to a hydraulic supply (16) and/or to a hydraulic tank (18), and wherein the supply lines (21 a, 21 b) between the hydraulic supply (16) or the hydraulic tank (18) and the first hydraulic unit (12) have a first valve (24), via which the first hydraulic unit (12) is independently activated, at least in one operating mode, **characterized in that** the supply lines (22a, 22b) between the hydraulic supply (16) or the hydraulic tank (18) and the second hydraulic unit (14) have a second valve (44), via which the second hydraulic unit (14) is independently activated, at least in one operating mode, and wherein a third valve (41) is provided in connecting lines (39a, 39b), via which the first supply lines (21 a, 22a) can be connected to and interrupted from each other and the second supply lines (21 b, 22b) can be connected to and interrupted from each other, by means of which third valve the piston chambers (28, 30) and the piston rod chambers (34, 36) of the hydraulic units (12, 14) are in each case connected to or interrupted from each other, at least in one operating mode.

8. Method according to Claim 7, **characterized in that** the upper member has a double-action, length-adjustable hydraulic unit (10).

9. Method according to Claim 7 or 8, **characterized in that** the piston chamber (26, 28, 30) and/or the piston rod chamber (32, 34, 36) of all of the hydraulic units (10, 12, 14) are/is separated from the hydraulic supply (16) and from the hydraulic tank (18).

10. Method according to one of Claims 7 to 9, **characterized in that** the piston chamber (28, 30) and/or the piston rod chamber (34, 36) of at least two hydraulic units (12, 14) are separated from each other.

11. Method according to one of Claims 7 to 10, **characterized in that** the piston chamber (26, 28, 30) and/or the piston rod chamber (32, 34, 36) of at least two hydraulic units (10, 12, 14) are connected to each other.

12. Method according to one of Claims 7 to 11, **characterized in that** the piston chamber (26, 28, 30) and/or the piston rod chamber (32, 34, 36) of at least one hydraulic unit (10, 12, 14) are/is connected to the hydraulic tank (18).

13. Method according to one of Claims 7 to 12, **characterized in that** the piston chambers (28, 30) of the two hydraulic units (12, 14) provided for adjusting the orientation of the lower members are connected to the hydraulic tank (18).

14. Method according to one of Claims 7 to 13, **characterized in that** the piston chambers (26, 28, 30) of all of the hydraulic units (10, 12, 14) are connected to the hydraulic tank (18).

## Revendications

1. Dispositif de commande d'un châssis d'appareil à trois points pour un véhicule utilitaire agricole ou industriel, en particulier pour un tracteur, le châssis d'appareil à trois points comprenant un bras de liaison supérieur et deux bras de liaison inférieurs, une unité hydraulique (12, 14) réglable en longueur et agissant des deux côtés étant à chaque fois prévue pour le réglage de l'orientation des bras de liaison inférieurs,
les unités hydrauliques (12, 14) présentant à chaque fois un vérin hydraulique qui présente un espace de piston (28, 30) et un espace de tige de piston (34, 36), l'espace de piston (28, 30) pouvant être raccordé à des premières lignes d'alimentation et l'espace de tige de piston (34, 36) pouvant être raccordé à des deuxièmes lignes d'alimentation (21 a, 21 b, 22a, 22b),
les unités hydrauliques (12, 14) pouvant être à chaque fois connectées par le biais des premières et deuxièmes lignes d'alimentation (21 a, 21 b, 22a, 22b) à une alimentation hydraulique (16) et/ou à un réservoir hydraulique (18), et
les lignes d'alimentation (21 a, 21 b) présentant, entre l'alimentation hydraulique (16) ou le réservoir hydraulique (18) et la première unité hydraulique (12), une première soupape (24), pour la commande indépendante de la première unité hydraulique (12),
**caractérisé en ce que**
les lignes d'alimentation (22a, 22b) présentent, entre l'alimentation hydraulique (16) ou le réservoir hydraulique (18) et la deuxième unité hydraulique (14), une deuxième soupape (44), pour la commande indépendante de la deuxième unité hydraulique (14) et une troisième soupape (41) étant prévue dans des lignes de liaison (39a, 39b) par le biais desquelles les premières lignes d'alimentation (21 a, 22a) peuvent être reliées l'une à l'autre et les deuxièmes lignes d'alimentation (21 b, 22b) peuvent être reliées l'une à l'autre et peuvent être interrompues, avec laquelle troisième soupape les espaces de piston (28, 30) et les espaces de tige de piston (34, 36) des unités hydrauliques (12, 14) peuvent à chaque fois être reliés les uns aux autres ou peuvent être interrompus.

2. Dispositif selon la revendication 1, **caractérisé en ce que** le bras de liaison supérieur présente une unité hydraulique (10) réglable en longueur et agissant des deux côtés.

3. Dispositif selon la revendication 1 ou 2, **caractérisé en ce qu'**une soupape (22, 24, 44) est réalisée et peut être commandée de telle sorte que la liaison entre l'espace de piston (26, 28, 30) d'une unité hydraulique (10, 12, 14) et l'alimentation hydraulique (16) ou le réservoir hydraulique (18) peut être établie ou interrompue.

4. Dispositif selon l'une quelconque des revendications 1 à 3, **caractérisé en ce qu'**une soupape (22, 24, 44) est réalisée et peut être commandée de telle sorte que la liaison entre l'espace de tige de piston (32, 34, 36) d'une unité hydraulique (10, 12, 14) et l'alimentation hydraulique (16) ou le réservoir hydraulique (8) peut être établie ou interrompue.

5. Dispositif selon l'une quelconque des revendications 1 à 4, **caractérisé en ce que** la troisième soupape (41) est réalisée sous forme de soupape à 4/2 voies, avec laquelle de préférence l'espace de piston (28, 30) et l'espace de tige de piston (34, 36) de différentes unités hydrauliques (12, 14) peuvent être reliés l'un à l'autre et/ou peuvent être interrompus.

6. Dispositif selon l'une quelconque des revendications 1 à 5, **caractérisé en ce qu'**au moins une ligne de liaison (39a, 39b) peut être reliée au réservoir hydraulique (18) - de préférence au moyen d'un clapet anti-retour (42).

7. Procédé de commande d'un châssis d'appareil à trois points pour un véhicule utilitaire agricole ou industriel, en particulier pour un tracteur, le châssis d'appareil à trois points comprenant un bras de liaison supérieur et deux bras de liaison inférieurs, l'orientation des bras de liaison inférieurs s'effectuant à chaque fois au moyen d'une unité hydraulique (12, 14) réglable en longueur et agissant des deux côtés,
les unités hydrauliques (12, 14) présentant à chaque fois un vérin hydraulique qui présente un espace de piston (28, 30) et un espace de tige de piston (34, 36), l'espace de piston (28, 30) pouvant être raccordé à des premières lignes d'alimentation et l'espace de tige de piston (34, 36) pouvant être raccordé à des deuxièmes lignes d'alimentation (21 a, 21 b, 22a, 22b),
les unités hydrauliques (12, 14) pouvant être à chaque fois connectées par le biais des premières et deuxièmes lignes d'alimentation (21 a, 21 b, 22a, 22b) à une alimentation hydraulique (16) et/ou à un réservoir hydraulique (18), et
les lignes d'alimentation (21 a, 21 b) présentant, entre l'alimentation hydraulique (16) ou le réservoir hydraulique (18) et la première unité hydraulique (12), une première soupape (24) par le biais de laquelle au moins dans un mode de fonctionnement la première unité hydraulique (12) est commandée indépendamment,
**caractérisé en ce que**
les lignes d'alimentation (22a, 22b) entre l'alimentation hydraulique (16) ou le réservoir hydraulique (18) et la deuxième unité hydraulique (14) présentent une deuxième soupape (44) par le biais de laquelle au moins dans un mode de fonctionnement la deuxième unité hydraulique (14) est commandée indépendamment et
une troisième soupape (41) étant prévue dans des lignes de liaison (39a, 39b) par le biais desquelles les premières lignes d'alimentation (21 a, 22a) peuvent être reliées l'une à l'autre et les deuxièmes lignes d'alimentation (21 b, 22b) peuvent être reliées l'une à l'autre et peuvent être interrompues, avec laquelle troisième soupape les espaces de piston (28, 30) et les espaces de tige de piston (34, 36) des unités hydrauliques (12, 14) peuvent à chaque fois être reliés les uns aux autres ou peuvent être interrompus au moins dans un mode de fonctionnement.

8. Procédé selon la revendication 7, **caractérisé en ce que** le bras de liaison supérieur présente une unité hydraulique (10) réglable en longueur et agissant des deux côtés.

9. Procédé selon la revendication 7 ou 8, **caractérisé en ce que** l'espace de piston (26, 28, 30) et/ou l'espace de tige de piston (32, 34, 36) de toutes les unités hydrauliques (10, 12, 14) sont séparés de l'alimentation hydraulique (16) et du réservoir hydraulique (18).

10. Procédé selon l'une quelconque des revendications 7 à 9, **caractérisé en ce que** l'espace de piston (28, 30) et/ou l'espace de tige de piston (34, 36) d'au moins deux unités hydrauliques (12, 14) sont séparés l'un de l'autre.

11. Procédé selon l'une quelconque des revendications 7 à 10, **caractérisé en ce que** l'espace de piston (26, 28, 30) et/ou l'espace de tige de piston (32, 34, 36) d'au moins deux unités hydrauliques (10, 12, 14) sont reliés l'un à l'autre.

12. Procédé selon l'une quelconque des revendications 7 à 11, **caractérisé en ce que** l'espace de piston (26, 28, 30) et/ou l'espace de tige de piston (32, 34, 36) d'au moins une unité hydraulique (10, 12, 14) sont reliés au réservoir hydraulique (18).

13. Procédé selon l'une quelconque des revendications 7 à 12, **caractérisé en ce que** les espaces de piston (28, 30) de deux unités hydrauliques (12, 14) prévues pour le réglage de l'orientation des bras de liaison inférieurs sont reliés au réservoir hydraulique (18).

14. Procédé selon l'une quelconque des revendications 7 à 13, **caractérisé en ce que** les espaces de piston (26, 28, 30) de toutes les unités hydrauliques (10, 12, 14) sont reliés au réservoir hydraulique (18).
